# EUROPÄISCHE PATENTANMELDUNG

(11) **EP 0 590 550 A2**
(43) Veröffentlichungstag der Anmeldung: **06.04.1994**
(21) Anmeldenummer: 93115510.5
(22) Anmeldetag: 25.09.1993
(51) Int. Cl.: B60Q 3/04, B60Q 1/14

(54) **Beleuchtungsvorrichtung für eine Gruppe von Bedien- und/oder Anzeigeelementen wenigstens eines Bediengerätes in einem Fahrzeug**

(30) Priorität: 01.10.1992 DE 4232972
(71) Anmelder: ROBERT BOSCH GMBH, 70442 Stuttgart (DE)
(72) Erfinder: Meyer, Carsten, Dipl.-Ing., D-70437 Stuttgart (DE); Scholz, Matthias, Dipl.-Ing., D-70499 Stuttgart (DE)

(57) **Zusammenfassung**

Es wird eine Beleuchtungsvorrichtung für eine Gruppe von Bedien- und/oder Anzeigeelementen (21 - 23) wenigstens eines Bediengerätes (14, 25, 26) in einem Fahrzeug vorgeschlagen, wobei die Bedien- und/oder Anzeigeelemente (21 - 23) durch mehrere Beleuchtungselemente (18 - 20) beleuchtbar sind und ein Schalter (11) zum Einschalten der Beleuchtungsvorrichtung vorgesehen ist. Durch diesen Schalter (11) wird zunächst nur eine Suchbeleuchtung (13) eingeschaltet. Im Bereich dieser Suchbeleuchtung (13) ist ein berührungslos arbeitender Näherungsschalter (15) angeordnet, durch den ein steuerbarer Schalter (17) zur Einschaltung der übrigen Beleuchtungselemente (18 - 20) betätigbar ist. Hierdurch wird insbesondere bei einer großen Zahl von Bediengeräten (14) die Zahl der ständig eingeschalteten Beleuchtungselemente reduziert, um die Ablenkung und Blendung des Fahrers zu reduzieren. Will er ein bestimmtes Bediengerät verändern oder ablesen, so braucht er lediglich seine Hand in den Bereich des Näherungsschalters (15) zu bringen, um auch die übrigen Beleuchtungselemente (18 - 20) einzuschalten.

## Beschreibung

### Stand der Technik

Die Erfindung betrifft eine Beleuchtungsvorrichtung für eine Gruppe von Bedien- und/oder Anzeigeelementen wenigstens eines Bediengerätes in einem Fahrzeug, wobei die Bedien- und/oder Anzeigeelemente durch mehrere Beleuchtungselemente beleuchtbar sind und ein Schalter zum Einschalten der Beleuchtungsvorrichtung vorgesehen ist.

Um auch eine Bedienung bei Dunkelheit sicherzustellen, sind die meisten Bedien- und/oder Anzeigeelemente am Armaturenbrett eines Fahrzeuges, insbesondere Kraftfahrzeuges, beleuchtbar, d.h., sie werden üblicherweise gleichzeitig mit dem Einschalten des Fahrtlichtes eingeschaltet. Bei modernen Kraftfahrzeugen hat sich die Zahl von Bedien- und/oder Anzeigeelementen stark erhöht. Neben den klassischen Bedien- und/oder Anzeigeelementen, wie Lichtschalter, Wischerschalter, Fahrtrichtungsanzeiger und Anzeigeinstrumenten für die Geschwindigkeit, Drehzahl und Temperaturüberwachung kommen heute sehr oft noch zusätzliche Bediengeräte, wie Radios, Heizungs- und/oder Klimaregelgeräte, Bordcomupter, elektrische Tür- und Sitzsteuerungen u.dgl. hinzu. Dies bedeutet eine immense Zahl von beleuchteten Elementen und eine riesige Informationsfülle, bei der die Gefahr besteht, daß der Autofahrer vom Straßenverkehr abgelenkt und einem erhöhten Streß ausgesetzt ist. Darüberhinaus erzeugen die vielen beleuchteten Elemente oftmals unerwünschte Reflexion an der Windschutzscheibe.

### Vorteile der Erfindung

Die erfindungsgemäße Beleuchtungsvorrichtung mit den kennzeichnenden Merkmalen des Hauptanspruches hat demgegenüber den Vorteil, daß beispielsweise nur die wichtigsten Bedien- und/oder Anzeigeelemente ständig beleuchtet werden, und ein Einschalten weiterer Bedien- und/oder Anzeigeelemente von Bediengeräten nur dann erfolgt, wenn der Fahrer seine Hand in den Bereich des jeweiligen Bediengerätes bewegt. Hierdurch verringert sich die Zahl der ständig beleuchteten Bedien- und/oder Anzeigeelemente drastisch und eine Beleuchtung erfolgt nur bei Bedarf, wobei das Einschalten einfach und bequem durch annähern der Hand des Fahrers oder Beifahrers erfolgt. Die Gesamtmenge der auf den Fahrer einwirkenden Informationen wird dadurch reduziert, und er kann sich besser auf die Straße konzentrieren.

Durch die in den Unteransprüchen aufgeführten Maßnahmen sind vorteilhafte Weiterbildungen und Verbesserungen der im Hauptanspruch angegebenen Beleuchtungsvorrichtung möglich.

Der Näherungsschalter ist vorzugsweise als optoelektronische Sender-/Empfängereinheit ausgebildet, z.B. als Lichtschranke oder Reflexlichtschranke. Hierdurch kann die Annäherung einer Hand schon auf relativ große Entfernungen erkannt und die Einschaltung der übrigen Beleuchtungselemente bewirkt werden.

Die Suchbeleuchtung kann in vorteilhafter Weise entweder als separates Beleuchtungselement ausgebildet sein, das als einziges Beleuchtungselement eines Bediengerätes eingeschaltet ist, oder diese Suchbeleuchtung wird durch wenigstens ein Beleuchtungselement für ein Bedien- und/oder Anzeigeelement gebildet, beispielsweise durch ein beleuchtetes Display. Zur Einschaltung der übrigen Beleuchtungselemente braucht der Fahrer oder Beifahrer daher lediglich seine Hand in die Nähe dieser Suchbeleuchtung bringen, also beispielsweise in die Nähe des gut erkennbaren beleuchteten Displays.

Um nach Beendigung der Einstelloperationen oder allgemein nach der Entfernung der Hand aus dem Bereich des Näherungsschalters nach dem Einschalten der übrigen Beleuchtungselemente noch beispielsweise den eingestellten Zustand ablesen oder erkennen zu können, steht der steuerbare Schalter mit einem die übrigen Beleuchtungselemente auch noch nach der Aktivierung des Näherungsschalters für eine vorgebbare Zeitspanne in eingeschaltetem Zustand haltenden Zeitglied in Wirkverbindung. Diese Zeitspanne ist so bemessen, daß sie ausreicht, die vorgenommenen Einstellungsveränderungen überprüfen zu können und/oder um ein Display oder eine sonstige Anzeige- oder Informationseinrichtung abzulesen.

Bei den Bedien- und/oder Anzeigeelementen handelt es sich insbesondere um Schalter, Dreh- oder Schiebesteller, Taster und/oder Displays. Diese Elemente sind jeweils in einer bestimmten Anordnung und Auswahl einem Bediengerät zugeordnet, wie einem Autoradio, einer Heizungs- und/oder Klimaregelung und/oder einem anderen seltener benötigten Bediengerät, das nur bei Bedarf beleuchtet werden soll.

Um die Beleuchtung für die Bedien- und/oder Anzeigeelemente für die verschiedenen Bediengeräte unabhängig voneinander einschalten zu können, ist zweckmäßigerweise jedem Bediengerät eine Suchbeleuchtung und ein Näherungsschalter zugeordnet, dessen Betätigung die übrigen Beleuchtungselemente des jeweiligen Bediengerätes einschaltet. Hierdurch wird die Aufmerksamkeit ausschließlich auf die Bedien- und/oder Anzeigeelemente dieses Bediengerätes gerichtet und eine Ablenkung durch andere Beleuchtungselemente, die im Augenblick nicht benötigt werden, entfällt.

### Zeichnung

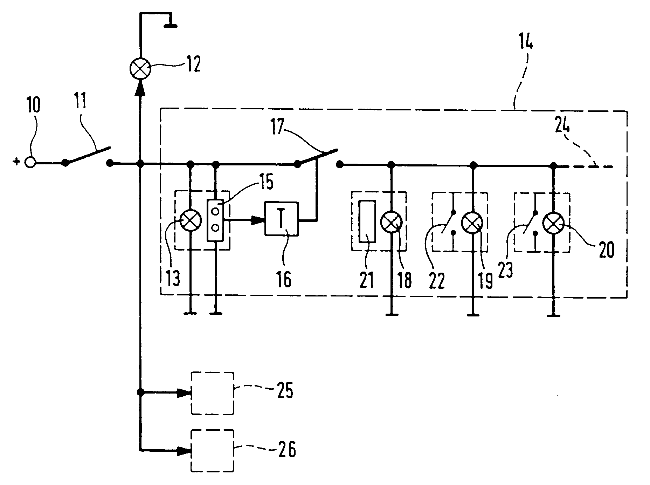

Ein Ausführungsbeispiel der Erfindung ist in der Zeichnung dargestellt und in der nachfolgenden Beschreibung näher erläutert. Die einzige Figur zeigt ein Schaltbild einer derartigen Beleuchtungsvorrichtung als Ausführungsbeispiel.

### Beschreibung des Ausführungsbeispieles

Bei dem in der einzigen Figur dargestellten Ausführungsbeispiel liegt der positive Pol einer Versorgungsspannungsquelle an einer Klemme 10, während der negative Pol an Masse, also z.B. an der leitenden Karosserie liegt. Bei einem Kraftfahrzeug wird die erforderliche Versorgungsspannung üblicherweise durch eine Batterie zur Verfügung gestellt. Diese Klemme 10 ist über einen Lichtschalter 11 mit einer vereinfacht dargestellten Fahrtbeleuchtung 12 verbunden, die üblicherweise beim Kraftfahrzeug aus Fernscheinwerfern, Abblendscheinwerfern, Standlichtern, Rücklichtern, u.dgl. besteht.

Gleichzeitig mit dem Einschalten der Fahrtbeleuchtung 12 wird eine mit dem Lichtschalter 11 verbundene Suchbeleuchtung 13 eines Bediengerätes 14 eingeschaltet, bei dem es sich beispielsweise um eine Autoradio, eine Heizungs- und/oder Klimaregelung oder um ein anderes seltener benötigtes Bediengerät handeln kann. In räumlicher Nähe zur Suchbeleuchtung 13 ist eine optoelektronische Sender-/Empfängereinheit 15 angeordnet, die beispielsweise als Lichtschranke oder Reflexlichtschranke ausgebildet sein kann. Diese Sender-/Empfängereinheit 15 ist ebenfalls mit einem Anschluß am Lichtschalter 11 und mit dem anderen Anschluß an Masse angeschlossen. Eine derartige optoelektronische Sender-/Empfängereinheit erzeugt in bekannter Weise ein Ausgangssignal, wenn durch Annäherung eines Gegenstandes ein Lichtstrahl unterbrochen, absorbiert oder abgelenkt wird, so daß er nicht mehr zur Empfängereinheit zurückgelangen kann. Durch dieses Ausgangssignal dieser Sender-/Empfängereinheit 15 wird über ein Zeitglied 16 ein in Reihe zum Lichtschalter 11 geschalteter weiterer elektrischer Schalter 17 gesteuert. Bei geschlossenem Schalter 17 werden drei Beleuchtungselemente 18 - 20 eingeschaltet, deren jeweiliger zweiter Anschluß an Masse liegt. Diese Beleuchtungselemente 18 - 20 beleuchten jeweils ein Display 21 sowie Betätigungsvorrichtungen für Schaltelemente 22, 23 des Bediengerätes 14. Eine gestrichelte Linie 24 soll andeuten, daß noch weitere Beleuchtungselemente vorgesehen sein können, die weitere Bedien- und/oder Anzeigeelemente des Bediengerätes 14 beleuchten, beispielsweise Dreh- oder Schiebesteller, Taster oder andere Anzeigevorrichtungen.

Beim Einschalten des Lichtschalters 11 brennt zunächst neben der Fahrtbeleuchtung 12 lediglich die als einzelnes Beleuchtungselement ausgebildete Suchbeleuchtung 13. Will der Fahrer oder Beifahrer am Bediengerät 14 eine Einstelloperation vornehmen, oder ein Display oder eine andere Zustandsanzeige ablesen, so muß er seine Hand oder einen anderen Gegenstand in die Nähe der Suchbeleuchtung 13 und damit der Sender-/Empfängereinheit 15 bringen. Hierdurch wird über das Zeitglied 16 der Schalter 17 geschlossen, und die übrigen Beleuchtungselemente 18 - 20 werden eingeschaltet. Das Bediengerät 14 bzw. dessen Bedien- und/oder Anzeigeelemente sind nun vollständig beleuchtet, so daß die vorgesehene Operation durchgeführt werden kann. Nach deren Durchführung und Wegziehen der Hand bleibt infolge des Zeitgliedes 16 die Beleuchtung noch für eine vorgebbare Zeitspanne eingeschaltet, so daß der Fahrer oder Beifahrer noch die Möglichkeit hat, das Display 21 oder eine andere Zustandsanzeige abzulesen oder beispielsweise die Stellung von Dreh- oder Schiebestellern sowie Tastschaltern oder sonstigen Schaltern zu kontrollieren. Danach erlischt die Beleuchtung wieder bis auf die Suchbeleuchtung 13, so daß eine Ablenkung des Fahrers oder ein Blenden durch Reflexionen weitgehend verhindert werden.

Anstelle eines separaten Beleuchtungselementes als Suchbeleuchtung 13 kann auch ein ohnehin vorhandenes Beleuchtungselement für ein Bedien- und/oder Anzeigeelement als Suchbeleuchtung eingesetzt werden. Beispielsweise kann bei einem derartigen Bediengerät 14 nach Einschalten des Lichtschalters 11 ein Display ständig beleuchtet sein, das als Suchbeleuchtung dienen kann. Die optoelektronische Sender-/Empfängereinheit als Näherungsschalter wird dann in der unmittelbaren Nähe eines solchen Displays angeordnet. Jedes andere Beleuchtungselement oder auch eine kleine Gruppe von Beleuchtungselementen kann dabei als Suchbeleuchtung dienen.

Parallel zur Beleuchtung für das Bediengerät 14 können entsprechende Beleuchtungsvorrichtungen für andere Bediengeräte 25, 26 vorgesehen sein. Bei jedem Bediengerät 14, 25, 26 brennt nach Betätigung des Lichtschalters 11 jeweils nur eine Suchbeleuchtung 13, während die übrigen Beleuchtungselemente des jeweiligen Bediengerätes durch Annäherung beispielsweise einer Hand eingeschaltet werden können.

## Patentansprüche

1. Beleuchtungsvorrichtung für eine Gruppe von Bedien- und/oder Anzeigeelementen wenigstens eines Bediengerätes in einem Fahrzeug, wobei die Bedien- und/oder Anzeigeelemente durch mehrere Beleuchtungselemente beleuchtbar sind und ein Schalter zum Einschalten der Beleuchtungsvorrichtung vorgesehen ist, dadurch gekennzeichnet, daß durch den Schalter (11) nur eine Suchbeleuchtung (13) einschaltbar ist, und daß ein berührungslos arbeitender Näherungsschalter (15) im Bereich der Suchbeleuchtung (13) angeordnet ist, durch den ein steuerbarer Schalter (17) zur Einschaltung der übrigen Beleuchtungselemente (18 - 20) betätigbar ist.

2. Beleuchtungsvorrichtung nach Anspruch 1, dadurch gekennzeichnet, daß der Näherungsschalter als optoelektronische Sender-/Empfängereinheit ausgebildet ist.

3. Beleuchtungsvorrichtung nach Anspruch 2, dadurch gekennzeichnet, daß der Näherungsschalter (15) als Lichtschranke oder Reflexlichtschranke ausgebildet ist.

4. Beleuchtungsvorrichtung nach einem der vorhergehenden Ansprüche, dadurch gekennzeichnet, daß die Suchbeleuchtung (13) als separates Beleuchtungselement ausgebildet ist.

5. Beleuchtungsvorrichtung nach einem der Ansprüche 1 bis 3, dadurch gekennzeichnet, daß die Suchbeleuchtung durch wenigstens ein Beleuchtungselement für ein Bedien- und/oder Anzeigeelement gebildet wird.

6. Beleuchtungsvorrichtung nach einem der vorhergehenden Ansprüche, dadurch gekennzeichnet, daß der steuerbare Schalter (17) mit einem die übrigen Beleuchtungselemente (18 - 20) auch noch nach Deaktivierung des Näherungsschalters (15) für eine vorgebbare Zeitspanne im eingeschalteten Zustand haltenden Zeitglied (16) in Wirkverbindung steht.

7. Beleuchtungsvorrichtung nach einem der vorhergehenden Ansprüche, dadurch gekennzeichnet, daß die Bedien- und/oder Anzeigeelemente (21 - 23) als Schalter, Dreh- oder Schiebesteller, Taster und/oder Display ausgebildet sind.

8. Beleuchtungsvorrichtung nach einem der vorhergehenden Ansprüche, dadurch gekennzeichnet, daß das Bediengerät (14, 25, 26) ein Autoradio, eine Heizungs- und/oder Klimaregelung und/oder ein anderes seltener benötigten Bediengerät ist.

9. Beleuchtungsvorrichtung nach einem der vorhergehenden Ansprüche, dadurch gekennzeichnet, daß jedem Bediengerät (14, 25, 26) eine Suchbeleuchtung (13) und ein Näherungsschalter (15) zugeordnet ist, dessen Betätigung die übrigen Beleuchtungselemente (21 - 23) des jeweiligen Bediengerätes einschaltet.
